# EUROPÄISCHE PATENTSCHRIFT

(11) **EP 2 792 062 B1**
(45) Veröffentlichungstag und Bekanntmachung des Hinweises auf die Patenterteilung: **12.04.2017**
(21) Anmeldenummer: 12778982.4
(22) Anmeldetag: 05.10.2012
(51) Int. Cl.: H02P 29/032, B60L 11/18, B60L 15/20

(54) **E-MASCHINEN-ANSTEUERVERFAHREN UND- VORRICHTUNG**
ELECTRICAL MACHINE CONTROL METHOD AND APPARATUS
PROCÉDÉ ET DISPOSITIF DE COMMANDE DE MOTEUR ÉLECTRIQUE

(30) Priorität: 13.12.2011 DE 102011088460
(43) Veröffentlichungstag der Anmeldung: 22.10.2014
(73) Patentinhaber: Robert Bosch GmbH, 70442 Stuttgart (DE)
(72) Erfinder: WIRTH, Martin, 93404 Saint-Ouen Cedex (FR); SCHEIDLE, Alexander, 73139 Karlsruhe (DE)
(86) Internationale Anmeldenummer: PCT/EP2012/069746
(87) Internationale Veröffentlichungsnummer: WO 2013/087246

(56) Entgegenhaltungen:
- US-A1- 2009 026 998
- BEN-BRAHIM L ET AL: "Practical considerations for sensorless induction motor drive system", INDUSTRIAL ELECTRONICS SOCIETY, 1998. IECON '98. PROCEEDINGS OF THE 24 TH ANNUAL CONFERENCE OF THE IEEE AACHEN, GERMANY 31 AUG.-4 SEPT. 1998, NEW YORK, NY, USA,IEEE, US, Bd. 2, 31. August 1998 (1998-08-31), Seiten 1002-1007, XP010308082, DOI: 10.1109/IECON.1998.724231 ISBN: 978-0-7803-4503-4

## Beschreibung

Die vorliegende Erfindung betrifft ein Verfahren zum Ansteuern einer elektrischen Maschine, insbesondere für einen elektrischen oder Hybrid-Antriebsstrang eines Kraftfahrzeuges, wobei die elektrische Maschine ein Drehmoment sowohl bei positiven als auch bei negativen Drehzahlen bereitstellen kann, mit dem Schritt, anhand einer Kennlinie zu überprüfen, ob ein Drehmomentsollwert von der elektrischen Maschine gestellt werden kann oder darf, wobei die Kennlinie ein Grenzdrehmoment in Bezug auf die Drehzahl darstellt und einen ersten Abschnitt für positive Drehzahlen und einen zweiten Abschnitt für negative Drehzahlen aufweist.

Ferner betrifft die vorliegende Erfindung eine Steuervorrichtung für eine elektrische Maschine, wobei die Steuervorrichtung dazu ausgelegt ist, ein solches Verfahren durchzuführen. Schließlich betrifft die vorliegende Erfindung einen Antriebsstrang für ein Kraftfahrzeug mit einer elektrischen Maschine und einer derartigen Steuervorrichtung.

### Stand der Technik

Auf dem Gebiet der Kraftfahrzeug-Antriebstechnik ist es allgemein bekannt, eine elektrische Maschine als alleinigen Antrieb oder gemeinsam mit einem Antriebsmotor eines anderen Typs (Hybridantrieb) zu verwenden. In derartigen Elektro- oder Hybridfahrzeugen werden typischerweise elektrische Drehfeldmaschinen als Antriebsmotor verwendet. Zur Ansteuerung solcher Drehfeldmaschinen in einem Kraftfahrzeug dient eine Leistungselektronik, die einen Wechselrichter beinhaltet, der die Gleichspannung/Gleichstrom einer an Bord des Kraftfahrzeuges befindlichen (Hochvolt)-Batterie in einen Wechselstrom umwandelt. Der Wechselrichter weist dabei in der Regel eine Mehrzahl von ansteuerbaren Leistungsschaltern auf. Die Leistungsschalter werden mittels eines Steuergerätes pulsweiten-moduliert angesteuert, damit die elektrische Maschine im Motorbetrieb ein bestimmtes Drehmoment bei einer bestimmten Drehzahl einer Abtriebswelle der elektrischen Maschine erzeugt.

Bei der Ansteuerung der elektrischen Maschine müssen zur Berechnung der Momentenstrategie Drehmomentgrenzen ermittelt werden, die eine Aussage über die Leistungsfähigkeit des elektrischen Antriebes geben.

Dabei ist die elektrische Maschine generell dazu in der Lage, ein Drehmoment sowohl bei positiven als auch bei negativen Drehzahlen bereitzustellen. Im Motorbetrieb bedeutet dies, dass die elektrische Maschine bspw, auch zur Rückwärtsfahrt eines Kraftfahrzeuges verwendet werden kann. In manchen Fällen ist die elektrische Maschine auch dazu ausgelegt, als Generator zu arbeiten. Sofern dies auch bei positiven und negativen Drehzahlen möglich ist, spricht man von einem sog. 4-Quadrantenbetrieb. Ein derartiger elektrischer Antrieb ist aus der US 2009/0026998 A1 bekannt. Es ist ein Hybridantrieb mit einem Elektromotor offenbart, der motorisch wie generativ in beiden Drehrichtungen betrieben werden kann.

Um die Sicherheit und Verfügbarkeit der elektrischen Maschine bzw. des Antriebsstranges zu gewährleisten, ist es sinnvoll, Probleme bei der Berechnung der Drehmomentgrenzen zu verhindern. Ein Problem stellt die Berechnung der motorischen und generatorischen Drehmomentgrenze beim Nulldurchgang der Drehzahl (beliebiger Wechsel zwischen und positiver und negativer Drehzahl) dar. Dort kommt es zu Momentensprüngen, weil z.B. das generatorische Grenzmoment bei negativen Drehzahlen einen positiven Wert hat und bei positiven Drehzahlen einen negativen Wert. In entsprechender Weise hat das motorische Grenzmoment bei negativen Drehzahlen einen negativen Wert und bei positiven Drehzahlen einen positiven Wert. Durch den Sprung an diesen Grenzen kann es bei einem Wechsel von negativer zu positiver Drehzahl zu Problemen innerhalb der Momentenstrategie kommen, da bei Drehzahl Null nicht zwischen motorischem und generatorischem Betrieb unterschieden werden kann.

Vor diesem Hintergrund ist es eine Aufgabe der Erfindung, ein verbessertes Verfahren zum Ansteuern einer elektrischen Maschine, eine verbesserte Steuervorrichtung sowie einen verbesserten Antriebsstrang anzugeben, wobei insbesondere die Sicherheit und Verfügbarkeit verbessert sind.

### Offenbarung der Erfindung

Die obige Aufgabe wird gelöst durch ein Verfahren zum Ansteuern einer elektrischen Maschine, insbesondere für einen elektrischen oder Hybrid-Antriebsstrang eines Kraftfahrzeuges, wobei die elektrische Maschine ein Drehmoment sowohl bei positiven als auch bei negativen Drehzahlen bereitstellen kann, mit den Schritten:
- Überprüfen anhand einer Kennlinie, ob ein Drehmomentsollwert von der elektrischen Maschine gestellt werden kann oder darf, wobei die Kennlinie ein Grenzdrehmoment in Bezug auf die Drehzahl darstellt und einen ersten Abschnitt für positive Drehzahlen und einen zweiten Abschnitt für negative Drehzahlen aufweist, wobei der erste Abschnitt und der zweite Abschnitt im gleichen Quadranten der Kennlinie angeordnet sind.

Ferner wird die obige Aufgabe gelöst durch eine Steuervorrichtung für eine elektrische Maschine, wobei die Steuervorrichtung dazu ausgelegt und/oder eingerichtet ist, das obige Verfahren durchzuführen.

Schließlich wird die obige Aufgabe gelöst durch einen Antriebsstrang für ein Kraftfahrzeug, mit einer elektrischen Maschine und einer Steuervorrichtung der oben genannten Art.

Die elektrische Maschine kann entweder ausschließlich als Motor oder ausschließlich als Generator ausgelegt sein. Das Bereitstellen eines Drehmomentes bei positiven und negativen Drehzahlen bedeutet im vorliegenden Zusammenhang folglich, dass die elektrische Maschine dieses Drehmoment als Motor liefert bzw. als Generator aufnimmt. In entsprechender Weise kann die Kennlinie bei Betrieb als Motor ein motorisches Grenzdrehmoment darstellen, und bei einem Betrieb als Generator ein generatorisches Grenzdrehmoment. Das motorische Grenzdrehmoment ist bei einem Überprüfungsverfahren des Standes der Technik in den Quadranten I, III angeordnet, das generatorische Grenzdrehmoment im Stand der Technik in den Quadranten II, IV.

Erfindungsgemäß kann bei einem Betrieb als Motor der Abschnitt für negative Drehzahlen, der im Stand der Technik im Quadranten III angeordnet ist, nun auch im Quadranten I angeordnet sein, oder umgekehrt. In entsprechender Weise kann bei einem Betrieb als Generator der Abschnitt des Quadranten II erfindungsgemäß im Quadranten IV angeordnet sein, oder umgekehrt.

Folglich kann erfindungsgemäß eine Überprüfung, ob ein Drehmomentsollwert gestellt werden kann, unabhängig von dem Vorzeichen der Drehzahl erfolgen.

Gerade bei der Vorhersage von Drehmomentgrenzen und Eckpunktberechnungen ist dies sehr wichtig. Wegen der Unabhängigkeit von der Drehzahl bzw. dem Vorzeichen der Drehzahl ist eine Vorhersage dieser Werte möglich, so dass sich eine höhere Verfügbarkeit der elektrischen Maschine bzw. des Antriebsstranges ergibt. Unstetigkeiten im Nullpunkt können auf diese Weise vermieden werden.

Wenn beispielsweise beim Nulldurchgang die Drehmomentgrenzen und/oder - vorhersagen berechnet werden, kann es im Stand der Technik sein, dass eine Grenze falsch interpretiert wird. Beispielsweise kann im Stand der Technik das generatorische Grenzdrehmoment vom Wert im Quadranten II auf den Wert im Quadranten IV springen, wobei die Drehzahl jedoch noch auf den Quadranten II hindeutet. Hierdurch würde das generatorische Grenzdrehmoment in den Quadranten III gezogen, was bedeuten würde, dass nur noch motorisches Moment möglich wäre. In solchen Fällen würde dann von der Fahrzeugsteuerung falsch reagiert werden (zum Beispiel fälschlicherweise Motorstart, obwohl dies nicht erlaubt ist, oder Batterieladen, obgleich diese schon voll ist).

### Vorteile der Erfindung

Von besonderem Vorzug ist es, wenn ein Abschnitt des ersten und des zweiten Abschnittes durch Punktspiegelung am Ursprung der Kennlinie in den Quadranten des anderen Abschnittes gespiegelt worden ist.

Hierdurch ist es auf einfache und effektive Weise möglich, den ersten Abschnitt und den zweiten Abschnitt im gleichen Quadranten der Kennlinie anzuordnen.

Ferner ist es vorteilhaft, wenn das Drehmoment ein Motormoment ist und wenn der Abschnitt für negative Drehzahlen in dem Quadranten für positive Drehzahlen angeordnet wird.

Bei dieser Ausführungsform ist somit das Vorzeichen des Motormomentes, und insbesondere das Vorzeichen der Drehzahl, im Überprüfungsschritt immer positiv.

In entsprechender Weise ist es vorteilhaft, wenn das Drehmoment ein Generatormoment ist und wenn der Abschnitt für negative Drehzahlen in dem Quadranten für positive Drehzahlen angeordnet ist.

Bei dieser Ausführungsform ist somit das Vorzeichen des Generatormomentes im Überprüfungsschritt immer negativ, und insbesondere das Vorzeichen der Drehzahl immer positiv.

Insgesamt ist es ferner bevorzugt, wenn die Drehzahl vor dem Überprüfungsschritt ggf. einen Vorzeichenwechsel unterzogen wird.

Hierdurch kann sichergestellt werden, dass bspw. bei einer negativen Drehzahl der elektrischen Maschine eine Überprüfung in der Kennlinie im Bereich positiver Drehzahlen erfolgen kann.

Auch ist es vorteilhaft, wenn bei einem Anlauf der elektrischen Maschine aus der Drehzahl Null zunächst jener Abschnitt der Kennlinie zur Überprüfung herangezogen wird, dessen Grenzdrehmoment im Anlaufbereich kleiner ist.

Generell können der erste Abschnitt und der zweite Abschnitt, die im gleichen Quadranten der Kennlinie angeordnet sind, unterschiedlich sein (da bspw. bei Vorwärtsfahrt ein größeres Drehmoment bereitgestellt werden darf als bei Rückwärtsfahrt oder Ähnliches). Bei einem Anlauf aus der Drehzahl Null wird dann unabhängig von dem Vorzeichen der Ist-Drehzahl generell zunächst jener Abschnitt der Kennlinie zur Überprüfung herangezogen, dessen Grenzdrehmoment im Anlaufbereich kleiner ist.

Hierdurch kann die Sicherheit erhöht werden.

Vorzugsweise wird das Grenzdrehmoment in Abhängigkeit von einem oder mehreren der folgenden Parameter eingestellt, einschließlich Batteriestromgrenzen, Batteriespannungsgrenzen, Temperatur eines Wechselrichters, Drehzahl, Temperatur der elektrischen Maschine, sowie Diagnoseersatzfunktionen.

Das Grenzdrehmoment geht damit in die Momentenstrategie der Fahrzeugsteuerung ein. Wenn zum Beispiel die Drehmomentenvorhersage andeutet, dass in x Sekunden kein motorischer Strom mehr möglich ist, kann der Verbrennungsmotor vorsorglich gestartet werden, so dass die Batterie geladen werden kann, damit letztlich wieder Leistung zur motorischen Unterstützung verfügbar wird. Diese Art von Drehmomentenvorhersage ist also direkt an die Fahrstrategie gebunden.

Für die Drehmomentenvorhersage können ferner die gleichen Parameter eine Rolle spielen, wobei es sich bei diesen jedoch um vorhergesagte Parameter handelt. Zusätzlich kann die Drehmomentenvorhersage aufgrund weiterer Parameter wie der vorhergesagten Temperatur, Batterieströme, Wirkungsgrad ergänzt werden.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ausführungsbeispiele der Erfindung sind in der Zeichnung dargestellt und werden in der nachfolgenden Beschreibung näher erläutert.

### Kurze Beschreibung der Zeichnungen

Fig. 1 zeigt in schematischer Form einen Antriebsstrang eines Kraftfahrzeuges mit einer elektrischen Maschine;
Fig. 2 zeigt in schematischer Form ein Blockschaltbild eines Teils einer Steuervorrichtung für die elektrische Maschine;
Fig. 3 zeigt in schematischer Form ein Diagramm mit einer Grenzdrehmoment-Kennlinie; und
Fig. 4 zeigt in schematischer Form einen Teil eines Flussdiagramms des erfindungsgemäßen Verfahrens.

### Ausführungsformen der Erfindung

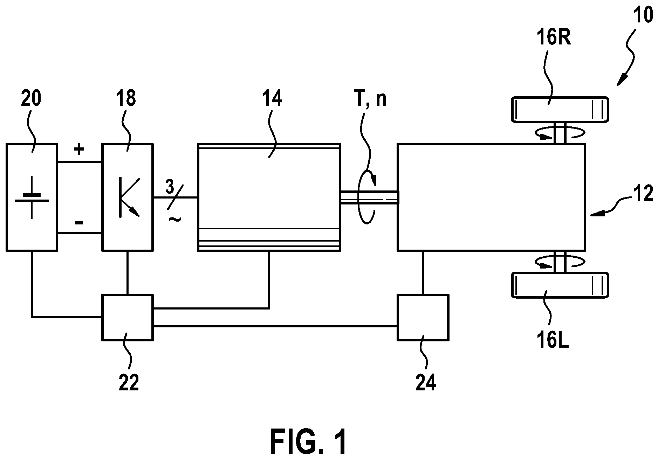

In Fig. 1 ist ein Kraftfahrzeug schematisch dargestellt und generell mit 10 bezeichnet. Das Kraftfahrzeug 10 weist einen Antriebsstrang 12 auf, der im vorliegenden Fall eine elektrische Drehfeldmaschine 14 zur Bereitstellung von Antriebsleistung beinhaltet. Der Antriebsstrang 12 dient zum Antreiben von angetriebenen Rädern 16L, 16R des Fahrzeugs 10.

Die elektrische Drehfeldmaschine 14 stellt an einer Abtriebswelle ein Drehmoment t bereit und dreht mit einer einstellbaren Drehzahl.

Der Antriebsstrang 12 kann dazu eingerichtet sein, das Fahrzeug 10 alleine mittels der elektrischen Drehfeldmaschine 14 anzutreiben (Elektrofahrzeug). Alternativ kann die elektrische Drehfeldmaschine 14 Teil eines Hybrid-Antriebsstranges 12 sein, wobei der Antriebsstrang 12 einen weiteren, in Fig. 1 nicht näher bezeichneten Antriebsmotor wie einen Verbrennungsmotor oder dergleichen beinhalten kann. Ferner kann der Antriebsstrang 12 in diesem Fall ein Getriebe und dergleichen aufweisen.

Die elektrische Drehfeldmaschine 14 ist mehrphasig ausgebildet (im vorliegenden Fall mit drei Phasen) und wird mittels einer Leistungselektronik 18 angesteuert. Die Leistungselektronik 18 ist mit einer Energieversorgung wie einer Gleichspannungsversorgung (z.B. Akkumulator) 20 des Fahrzeugs 10 verbunden und dient dazu, eine von dem Akkumulator 20 bereitgestellte Gleichspannung in drei Wechselströme für die drei Phasen der elektrischen Drehfeldmaschine umzurichten. Die Leistungselektronik 18 weist zu diesem Zweck eine Mehrzahl von Leistungsschaltern auf und wird mittels eines Steuergerätes 22 angesteuert. Das Steuergerät 22 kann ferner mit der elektrischen Drehfeldmaschine 14 verbunden sein, um beispielsweise Istwerte der Drehzahl und/oder Drehstellung eines Rotors der elektrischen Drehfeldmaschine 14 zu erhalten. Ferner kann das Steuergerät 22 mit dem Akkumulator 20 verbunden sein. Schließlich kann das Steuergerät 22 mit einer übergeordneten oder gleichberechtigten Steuereinrichtung 24 zur Ansteuerung von weiteren Komponenten des Antriebsstranges 12 verbunden sein.

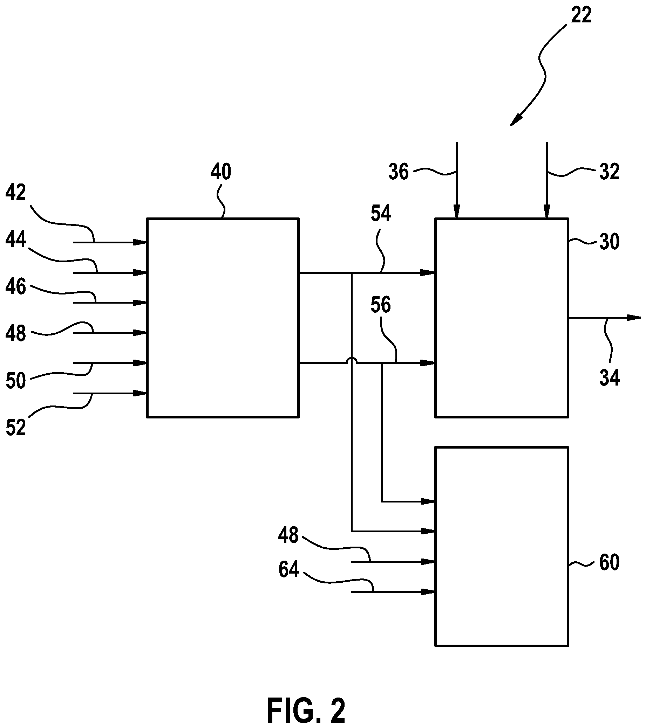

Fig. 2 zeigt ein Blockschaltbild eines Teils des Steuergerätes 22 zum Ansteuern der elektrischen Maschine 14.

Das Steuergerät 22 weist eine übergeordnete Regelung 30 auf, die ein extern vorgegebenes Soll-Drehmoment 32 empfängt. Die übergeordnete Regelung 30 erzeugt hieraus ein internes Sollmoment 34, das bspw. einem Stromregelkreis (der bspw. mittels einer d-q-Regelung arbeitet) zugeführt wird. Ferner empfängt die übergeordnete Regelung 30 bei 36 einen Sollmodus, der die Art der durchzuführenden Regelung bestimmt. Die Art der durchzuführenden Regelung kann eine Drehmomentenregelung, eine Drehzahlregelung, eine Spannungsregelung, etc. sein. Ggf. kann auch gar keine Regelungsart vorgegeben sein. Im letzteren Fall erfolgt keine Ansteuerung der Leistungselektronik, so dass vorzugsweise auch keine Berechnung der motorischen und generatorischen Drehmomentgrenze erfolgt und damit vorzugsweise auch keine Drehmomentvorhersage.

Das Steuergerät 22 weist ferner einen Block bzw. ein Modul 40 zur Berechnung von Drehmomentgrenzen auf. Das Drehmomentgrenzen-Berechnungsmodul 40 berechnet diese Drehmomentgrenzen anhand aktueller Parameter, einschließlich Batteriestromgrenzen 42, Batteriespannungsgrenzen 44, einer Temperatur 46 des Wechselrichters 18, der Drehzahl n, 48, einer Temperatur 50 der elektrischen Maschine 14 und/oder anhand von Diagnoseersatzfunktionen 52.

Das Drehmomentgrenzen-Berechnungsmodul 40 ermittelt hieraus eine aktuelle maximale Drehmomentgrenze 54 und ggf. eine minimale Drehmomentgrenze 56. Insbesondere umfasst das Berechnungsmodul Mittel, die einen Abschnitt des ersten und des zweiten Abschnittes der maximalen Drehmomentgrenzen 54 beziehungsweise der minimalen Drehmomentgrenze 56 durch Punktspiegelung am Ursprung der Kennlinie in den Quadranten des anderen Abschnittes spiegelt. Abhängig davon, in welchem Quadranten sich die Ansteuerung gerade befindet, wird entweder ein motorisches oder ein generatorisches Grenzdrehmoment auf eine solche minimale Drehmomentgrenze 56 gemappt; bei der maximalen Drehmomentgrenze 54 ist es genau umgekehrt. Die beiden Grenzen 54, 56 repräsentieren den Regelbereich, in dem die Leistungselektronik 18 arbeiten kann. Die Drehmomentgrenzen 54, 56 gehen auch in die Drehmomentenvorhersage ein. Die Drehmomentgrenzen 54, 56 werden der übergeordneten Regelung 30 eingegeben. Das in die übergeordnete Regelung 30 von extern vorgegebene Soll-Drehmoment 32 wird mit zumindest der maximalen Drehmomentgrenze 54 verglichen. Sofern das extern vorgegebene Soll-Drehmoment 32 kleiner ist als die maximale Drehmomentgrenze 54, wird das extern vorgegebene Soll-Drehmoment 32 als internes Sollmoment 34 ausgegeben. Falls das extern vorgegebene Soll-Drehmoment 32 hingegen größer ist als die maximale Drehmomentgrenze 54, wird das interne Sollmoment 34 auf den entsprechenden Wert der maximalen Drehmomentgrenze 54 reduziert.

Die Drehmomentgrenzen 54, 56 werden ferner einem Modul 60 zur Drehmomentprädiktion eingegeben. Dieses Drehmomentprädiktions-Modul 60 empfängt ferner die aktuelle Drehzahl n, 48 sowie Batterieprädiktionswerte 64. Die in dem Drehmomentprädiktions-Modul 60 ermittelten Werte gehen in die Momentenstrategie der Fahrzeugsteuerung ein.

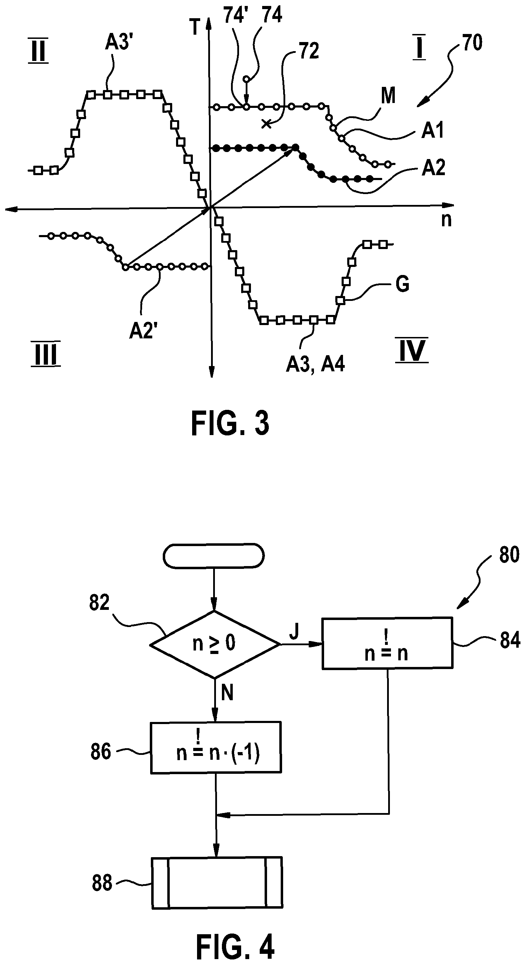

In Fig. 3 ist ein Diagramm 70 gezeigt, das das Drehmoment T über der Drehzahl n zeigt. Das Diagramm 70 enthält vier Quadranten I bis IV. Ferner sind in das Diagramm 70 eine Kennlinie M für ein motorisches Grenzdrehmoment sowie eine Kennlinie G für ein generatorisches Grenzdrehmoment eingetragen.

Der Motorbetrieb erfolgt normalerweise in den Quadranten I, III, während der Generatorbetrieb durch die Quadranten II, IV abgebildet ist. Demzufolge beinhaltet die Kennlinie M für positive Drehzahlen n einen Abschnitt A1 Im Quadranten I. Im Stand der Technik beinhaltet die Kennlinie M ferner einen Abschnitt A2' für negative Drehzahlen im Quadranten III. Vorliegend ist der Abschnitt A2' durch Punktspiegelung (wie durch Pfeile angedeutet) in den ersten Quadranten I auf A2 gespiegelt. Für negative Drehzahlen weist die Kennlinie M folglich einen Abschnitt A2 in dem ersten Quadranten I auf.

Die Generator-Kennlinie G beinhaltet einen Abschnitt A4 für positive Drehzahlen im vierten Quadranten. Im Stand der Technik beinhaltet die Generator-Kennlinie G ferner einen Abschnitt A3' im zweiten Quadranten. Vorliegend ist der Abschnitt A3' durch Punktspiegelung in den vierten Quadranten IV auf A3 gespiegelt. Da die Abschnitte A4, A3' punktsymmetrisch sind, beinhaltet die Generator-Kennlinie G vorliegend einen Abschnitt A4 für positive Drehzahlen sowie einen Abschnitt A3 für negative Drehzahlen, die im vorliegenden Fall jedoch identisch sind.

In Fig. 3 ist bei 72 ein erster beispielhafter Drehmoment-Sollwert eingetragen, der extern vorgegeben wird. Für den Fall, dass sich die elektrische Maschine im Motorbetrieb bei positiven Drehzahlen befindet, ist der Abschnitt A1 der Motoren-Kennlinie M anwendbar. Der Drehmoment-Sollwert 72 liegt unterhalb des für die jeweilige Drehzahl geltenden Grenzdrehmomentes, so dass der extern vorgegebene Drehmoment-Sollwert 72 als internes Sollmoment 34 weitergegeben werden kann.

Bei 74 ist hingegen ein Drehmoment-Sollwert gezeigt, der oberhalb des Grenzdrehmomentes liegt, so dass als internes Sollmoment ein Wert 74' entsprechend dem der jeweiligen Drehzahl zugeordneten Grenzdrehmoment ausgegeben wird.

Fig. 4 zeigt ein Blockdiagramm 80 einer Routine, die vor der Durchführung der Überprüfung anhand der jeweiligen Kennlinie M, G durchgeführt wird. In einer Abfrageroutine 82 wird zunächst überprüft, ob die Drehzahl n ≧ 0 ist. Falls dies der Fall ist, wird das Vorzeichen der Drehzahl in einem Block 84 bestätigt. Falls das Ergebnis der Abfrage im Block 82 negativ ist, wird die Drehzahl mit (- 1) multipliziert, und zwar in einem Block 86, so dass die Drehzahl positiv wird. Hierdurch kann ein Vergleich mit dem Grenzdrehmoment in den Quadranten I, IV für positive Drehzahlen n erfolgen, und zwar im Rahmen einer Überprüfungsroutine 88, die in Fig. 4 schematisch angedeutet ist.

## Patentansprüche

1. Verfahren zum Ansteuern einer elektrischen Maschine (14), insbesondere für einen elektrischen oder Hybrid-Antriebsstrang (12) eines Kraftfahrzeuges (10), wobei die elektrische Maschine (14) ein Drehmoment (T) sowohl bei positiven als auch bei negativen Drehzahlen (n) bereitstellen kann, mit den Schritten:
- Überprüfen anhand einer Kennlinie (M; G), ob ein Drehmomentsollwert (72; 74) von der elektrischen Maschine (14) gestellt werden kann oder darf, wobei die Kennlinie (M; G) ein Grenzdrehmoment in Bezug auf die Drehzahl (n) darstellt und einen ersten Abschnitt (A1;A4) für positive und einen zweiten Abschnitt für negative Drehzahlen (A2; A3) aufweist,
**dadurch gekennzeichnet, dass**
der erste Abschnitt (A1; A4) und der zweite Abschnitt (A2; A3) im gleichen Quadranten (I; IV) der Kennlinie (70) angeordnet sind.

2. Verfahren nach Anspruch 1, wobei ein Abschnitt (A1; A4; A2; A3) des ersten (A1; A4) und des zweiten Abschnittes (A2; A3) der Kennlinie (M; G) durch Punktspiegelung am Ursprung der Kennlinie (M; G) in den Quadranten (I; IV) des anderen Abschnittes gespiegelt worden ist.

3. Verfahren nach einem der vorhergehenden Ansprüche, wobei das Drehmoment (T) ein Motormoment ist und der Abschnitt (A2) für negative Drehzahlen in dem Quadranten (I) für positive Drehzahlen angeordnet ist.

4. Verfahren nach einem der vorhergehenden Ansprüche, wobei das Drehmoment (T) ein Generatormoment ist und der Abschnitt (A3) für negative Drehzahlen in dem Quadranten (IV) für positive Drehzahlen angeordnet ist.

5. Verfahren nach einem der vorhergehenden Ansprüche, wobei die Drehzahl vor dem Überprüfungsschritt ggf. einem Vorzeichenwechsel unterzogen wird.

6. Verfahren nach einem der vorhergehenden Ansprüche, wobei bei einem Anlauf der elektrischen Maschine (14) aus der Drehzahl Null zunächst jener Abschnitt der Kennlinie (M; G) zur Überprüfung herangezogen wird, dessen Grenzdrehmoment im Anlaufbereich kleiner ist.

7. Verfahren nach einem der vorhergehenden Ansprüche, wobei das Grenzdrehmoment in Abhängigkeit von einem oder mehreren der folgenden Parameter eingestellt wird, einschließlich Batteriestromgrenzen (42), Batteriespannungsgrenzen (44), Temperatur (46) eines Wechselrichters, Drehzahl (n; 48), Temperatur (50) der elektrischen Maschine (14), sowie Diagnoseersatzfunktionen (52).

8. Steuervorrichtung (22) für eine elektrische Maschine (14),
wobei die Steuervorrichtung (22) dazu ausgelegt ist, eine elektrische Maschine (14), insbesondere für einen elektrischen oder Hybrid-Antriebsstrang (12) eines Kraftfahrzeuges (10), anzusteuern,
wobei die elektrische Maschine (14) ein Drehmoment (T) sowohl bei positiven als auch bei negativen Drehzahlen (n) bereitstellen kann,
und die Steuervorrichtung (22) dazu ausgelegt ist, anhand einer Kennlinie (M; G) zu überprüfen, ob ein Drehmomentsollwert (72; 74) von der elektrischen Maschine (14) gestellt werden kann oder darf,
wobei die Kennlinie (M; G) ein Grenzdrehmoment in Bezug auf die Drehzahl (n) darstellt und einen ersten Abschnitt (A1 ;A4) für positive und einen zweiten Abschnitt für negative Drehzahlen (A2; A3) aufweist und der erste Abschnitt (A1; A4) und der zweite Abschnitt (A2; A3) im gleichen Quadranten (I; IV) der Kennlinie (70) angeordnet sind.

9. Antriebsstrang (12) für ein Kraftfahrzeug (10), mit einer elektrischen Maschine (14) und einer Steuervorrichtung (22) nach Anspruch 8.

## Claims

1. Method for controlling an electric machine (14), in particular for an electric or hybrid drive train (12) of a motor vehicle (10), wherein the electric machine (14) can provide a torque (T) both at positive and also at negative rotation speeds (n), comprising the steps:
• performing a check with the aid of a characteristic curve (M; G) as to whether a desired torque value (72; 74) can or may be provided by the electric machine (14), wherein the characteristic curve (M; G) represents a limit torque with respect to the rotation speed (n) and comprises a first section (A1; A4) for positive rotation speeds and a second section for negative rotation speeds (A2; A3),
**characterized in that**
the first section (A1; A4) and the second section (A2; A3) are arranged in the same quadrant (I; IV) of the characteristic curve (70).

2. Method according to Claim 1, wherein a section (A1; A4; A2; A3) of the first section (A1; A4) and of the second section (A2; A3) of the characteristic curve (M; G) is mirror-imaged by means of point mirror-imaging with respect to the origin of the characteristic curve (M; G) in the quadrant (I; IV) of the other section.

3. Method according to any one of the preceding claims, wherein the torque (T) is a motor mode torque and the section (A2) is arranged for negative rotation speeds in the quadrant (I) for positive rotation speeds.

4. Method according to any one of the preceding claims, wherein the torque (T) is a generator mode torque and the section (A3) for negative rotation speeds is arranged in the quadrant (IV) for positive rotation speeds.

5. Method according to any one of the preceding claims, wherein the rotation speed is subjected where necessary to an algebraic sign change prior to performing the checking step.

6. Method according to any one of the preceding claims, wherein, during the procedure of starting up the electric machine (14) from the rotation speed zero, initially the particular section of the characteristic curve (M; G) that has a lower limit torque in the start-up range is used in the checking procedure.

7. Method according to any one of the preceding claims, wherein the limit torque is adjusted in dependence upon one or several of the following parameters including battery current limits (42), battery voltage limits (44), temperature (46) of an AC converter, rotation speed (n; 48), temperature (50) of the electric machine (14) and also replacement diagnostic functions (52).

8. Control device (22) for an electric machine (14), wherein the control device (22) is designed so as to control an electric machine (14), in particular for an electric or hybrid drive train (12) of a motor vehicle (10), wherein the electric machine (14) can provide a torque (T) both at positive and also at negative rotation speeds (n), and the control device (22) is designed so as to check with the aid of a characteristic curve (M; G) as to whether a desired torque value (72; 74) can or may be provided by the electric machine (14), wherein the characteristic curve (M; G) represents a limit torque with respect to the rotation speed (n) and comprises a first section (A1; A4) for positive rotation speeds and a second section for negative rotation speeds (A2; A3), and the first section (A1; A4) and the second section (A2; A3) are arranged in the same quadrant (I; IV) of the characteristic curve (70).

9. Drive train (12) for a motor vehicle (10), having an electric machine (14) and a control device (22) according to Claim 8.

## Revendications

1. Procédé pour commander une machine électrique (14), notamment pour une chaîne cinématique (12) électrique ou hybride d'un véhicule automobile (10), la machine électrique (14) pouvant fournir un couple (T) à la fois aux vitesses de rotation (n) positives et négatives, comprenant les étapes suivantes :
- contrôle au moyen d'une courbe caractéristique (M ; G) si la machine électrique (14) est capable ou autorisée à produire un couple de consigne (72 ; 74), la courbe caractéristique (M ; G) représentant un couple limite en référence à la vitesse de rotation (n) et possédant une première portion (A1 ; A4) pour les vitesses de rotation positives et une deuxième portion pour les vitesses de rotation négatives (A2 ; A3),
**caractérisé en ce que**
la première portion (A1 ; A4) et la deuxième portion (A2 ; A3) se trouvent dans les mêmes quadrants (I ; IV) de la courbe caractéristique (70).

2. Procédé selon la revendication 1, une portion (A1 ; A4 ; A2 ; A3) de la première portion (A1 ; A4) et de la deuxième portion (A2 ; A3) de la courbe caractéristique (M ; G) ayant été réfléchie en symétrie dans les quadrants (I ; IV) de l'autre portion par symétrie des points au niveau de l'origine de la courbe caractéristique (M ; G).

3. Procédé selon l'une des revendications précédentes, le couple (T) étant un couple de moteur et la portion (A2) pour les vitesses de rotation négatives se trouvant dans le quadrant (I) pour les vitesses de rotation positives.

4. Procédé selon l'une des revendications précédentes, le couple (T) étant un couple de générateur et la portion (A3) pour les vitesses de rotation négatives se trouvant dans le quadrant (IV) pour les vitesses de rotation positives.

5. Procédé selon l'une des revendications précédentes, la vitesse de rotation étant éventuellement soumise à un changement de signe avant l'étape de contrôle.

6. Procédé selon l'une des revendications précédentes, la portion de la courbe caractéristique (M ; G) dont le couple limite dans la zone de démarrage est le plus petit étant utilisée pour le contrôle lors d'un démarrage de la machine électrique (14) depuis la vitesse de rotation nulle.

7. Procédé selon l'une des revendications précédentes, le couple limite étant réglé en fonction d'un ou plusieurs des paramètres suivants, incluant les limites de courant de batterie (42), les limites de tension de batterie (44), la température (46) d'un onduleur, la vitesse de rotation (n ; 48), la température (50) de la machine électrique (14) ainsi que des fonctions de substitution de diagnostic (52).

8. Dispositif de commande (22) pour une machine électrique (14), le dispositif de commande (22) étant conçu pour commander une machine électrique (14), notamment pour une chaîne cinématique (12) électrique ou hybride d'un véhicule automobile (10),
la machine électrique (14) pouvant fournir un couple (T) à la fois aux vitesses de rotation (n) positives et négatives,
et le dispositif de commande (22) étant conçu pour contrôler au moyen d'une courbe caractéristique (M ; G) si la machine électrique (14) est capable ou autorisée à produire un couple de consigne (72 ; 74),
la courbe caractéristique (M ; G) représentant un couple limite en référence à la vitesse de rotation (n) et possédant une première portion (A1 ; A4) pour les vitesses de rotation positives et une deuxième portion pour les vitesses de rotation négatives (A2 ; A3), et la première portion (A1 ; A4) et la deuxième portion (A2 ; A3) se trouvant dans les mêmes quadrants (I ; IV) de la courbe caractéristique (70).

9. Chaîne cinématique (12) pour un véhicule automobile (10) équipée d'une machine électrique (14) et d'un dispositif de commande (22) selon la revendication 8.
